# FASCICULE DE BREVET EUROPEEN

(11) **EP 2 095 984 B1**
(45) Date de publication et mention de la délivrance du brevet: **01.09.2010**
(21) Numéro de dépôt: 09151283.0
(22) Date de dépôt: 23.01.2009
(51) Int. Cl.: B60J 10/00, B60J 10/08, B60J 10/02

(54) **Joint d'étanchéité pour encadrement d'ouvrant, notamment de type porte ou fenêtre**
Dichtung für KFZ-Tür oder KFZ-Fenster
Sealing gasket of a vehicle door or vehicle window opening

(30) Priorité: 29.02.2008 FR 0851312
(43) Date de publication de la demande: 02.09.2009
(73) Titulaire: Peugeot Citroën Automobiles Société Anonyme, 78170 Velizy Villacoublay (FR)
(72) Inventeur: Derue, Nicolas, 92100 Boulogne-Billancourt (FR); Pruvost, Sébastien, 92100 Boulogne-Billancourt (FR)

(56) Documents cités:
- DE-A1- 2 700 954
- DE-A1- 3 207 795
- DE-U1- 9 003 934
- FR-A- 2 645 091
- US-A1- 2006 000 181

## Description

La présente invention se rapporte à un joint d'étanchéité pour un encadrement d'ouvrant, notamment de type porte ou fenêtre.

Elle concerne plus particulièrement un joint d'étanchéité comprenant une partie formant support destinée à être montée sur l'encadrement d'ouvrant et une lèvre d' ébénisterie attenante à ladite partie formant support, ce joint étant destiné à garnir le pourtour d'une ouverture obturable.

Dans le domaine automobile, il est connu d'employer de tels joints d'étanchéité pour des encadrements de porte, type porte latérale ou porte de coffre, ou de fenêtre afin de garnir les rebords de carrosserie entourant les ouvertures de ces portes ou fenêtres.

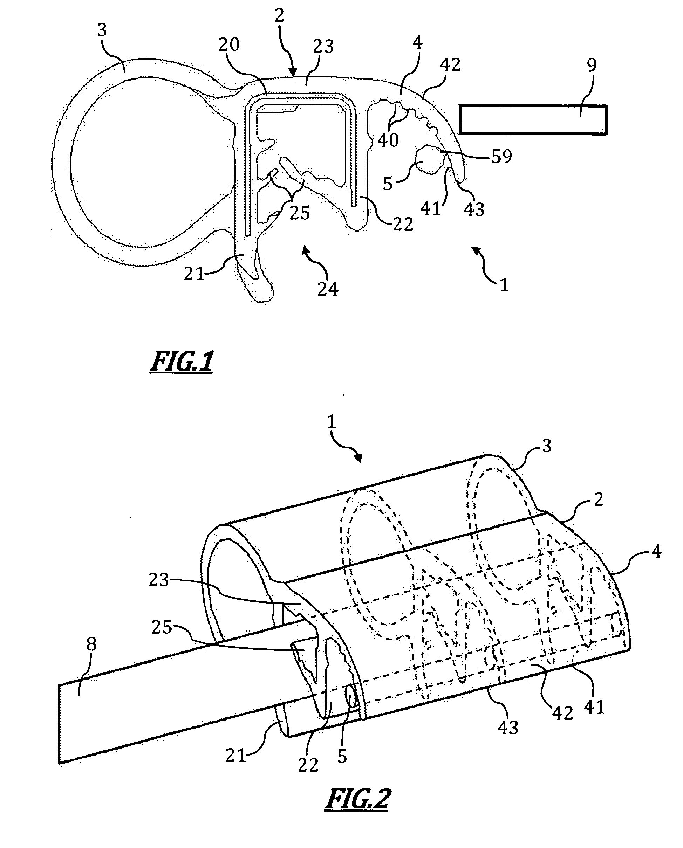

Comme représenté sur les figures 1 et 2, un tel joint 1, par exemple obtenu par un procédé d'extrusion d'une matière plastique, comporte :
- une partie formant support 2 destinée à être montée sur un encadrement 8 (non représenté en figure 1), et plus particulièrement le long du rebord de carrosserie délimitant l'ouverture obturable associée ;
- une partie d'étanchéité souple 3 solidaire de la partie formant support 2 et disposée pour que, à la fermeture de l'ouvrant dont l'encadrement 8 est garni dudit joint 1, l'ouvrant s'applique contre la partie d'étanchéité souple 3 afin notamment d'amortir la fermeture et d'empêcher des entrées d'air, d'eau ou de poussière, et
- une lèvre d'ébénisterie 4 attenante à ladite partie formant support 2 et à fonction décorative et de protection.

La partie formant support 2 est généralement formée d'un profilé à section en U, de sorte à coiffer et à pincer le rebord de carrosserie délimitant l'ouverture, dans lequel est souvent noyé une armature métallique centrale 20. Un tel support 2 en U comprend deux branches opposées, respectivement une première 21 et une deuxième 22 branches, reliées par une base 23 et délimitant une ouverture 24, et éventuellement des lèvres internes 25 qui font saillie à partir de chaque face en vis-à-vis des deux branches 21, 22 en direction de l'autre face, afin notamment d'éviter une désolidarisation accidentelle de ce support 2 et du rebord d'encadrement 8 qu'elle équipe.

La partie d'étanchéité souple 3 est généralement formée d'un profilé tubulaire attenant à une première branche 21 du support 2 en U, et destiné à être écrasé entre la porte et l'encadrement 8 de porte pour assurer l'étanchéité ; cette première branche 21 constituant la branche dite extérieure du support 2, c'est-à-dire celle située du côté extérieur du véhicule automobile une fois le joint 1 en place, la porte s'ouvrant en générale sur l'extérieur.

La lèvre d'ébénisterie 4 courbée en direction de l'ouverture 24 du support 2 en U, fait saillie du support 2. Cette lèvre d'ébénisterie 4 est plus particulièrement attenante à la deuxième branche 22 dudit support 2 en U, notamment au niveau de la jonction entre la base 23 et la deuxième branche 22 du support 2 en U ; ladite deuxième branche 22 constituant la branche dite intérieure du support 2, c'est-à-dire celle située du côté intérieur du véhicule automobile une fois le joint 1 en place. Cette lèvre d'ébénisterie 4 est donc opposée à la partie d'étanchéité souple 3 et a pour fonction de recouvrir des surfaces intérieures 9 du véhicule, telles que des garnitures internes ou des tapis de sol, qui sont disposées à l'intérieur du véhicule à proximité de l'encadrement 8. La lèvre d'ébénisterie 4 permet ainsi de masquer les jeux entre ces surfaces intérieures 9 et le joint 1, assurant ainsi une fonction à la fois d'étanchéité et esthétique ; une telle lèvre d'ébénisterie 4 étant souvent nommée lèvre cosmétique.

Cette lèvre d'ébénisterie 4 comporte parfois des crans 40 formés sur sa face 41 en regard du support 2, dite face inférieure, pour permettre un meilleur maintien sur la surface intérieure 9 correspondante, et également un cordon 5 solidaire de la face inférieure 41 de la lèvre d'ébénisterie 4 et destiné à permettre à un opérateur d'amener ladite lèvre 4 en recouvrement sur la surface intérieure 9, c'est-à-dire d'écarter la lèvre 4 du support 2 et la déformer jusqu'à ce que sa face inférieure 41 soit directement en appui contre cette surface intérieure 9.

Le cordon 5, par exemple de section circulaire, est solidairement lié à la lèvre d'ébénisterie 4 par une liaison ruptible 59, formée ici d'une réduction de matière entre le cordon 5 et la lèvre d'ébénisterie 4, au niveau du bord libre 43 de la lèvre 4. Autrement dit, le cordon 5 reste solidaire de la lèvre d'ébénisterie 4 jusqu'à ce qu'un opérateur exerce un effort, par exemple de type traction, sur ledit cordon 5 et rompe cette liaison ruptible 59, par exemple par déchirement de celle-ci, de sorte à désolidariser le cordon 5 et la lèvre d'ébénisterie 4. Les dimensions dudit cordon 5, telles que son diamètre, sont ainsi adaptées pour qu'un opérateur ou un outil puisse l'attraper et exercer un tel effort de désolidarisation sur ce dernier.

Les documents DE-3207795 et US-2006/000181 décrivent un tel joint d'étanchéité comprenant un cordon de pelage, ainsi qu'un procédé de fabrication associé.

Il est ainsi d'usage, dans le domaine automobile, d'employer un tel cordon 5, dit de cordon de pelage, pour l'opération de recouvrement d'une surface intérieure 9 par la lèvre d'ébénisterie 4. Cette opération de recouvrement est décrite ci-dessous, en référence aux figures 1 à 7.

Dans une première étape, le joint 1 est monté sur l'encadrement 8, non illustré en figure 1 mais illustré aux figures suivantes, au moyen du support 2 qui vient coiffer et pincer ledit encadrement 8. Dans cette position initiale, la lèvre d'ébénisterie 4 est dans une première position de repos, illustrée en figure 2.

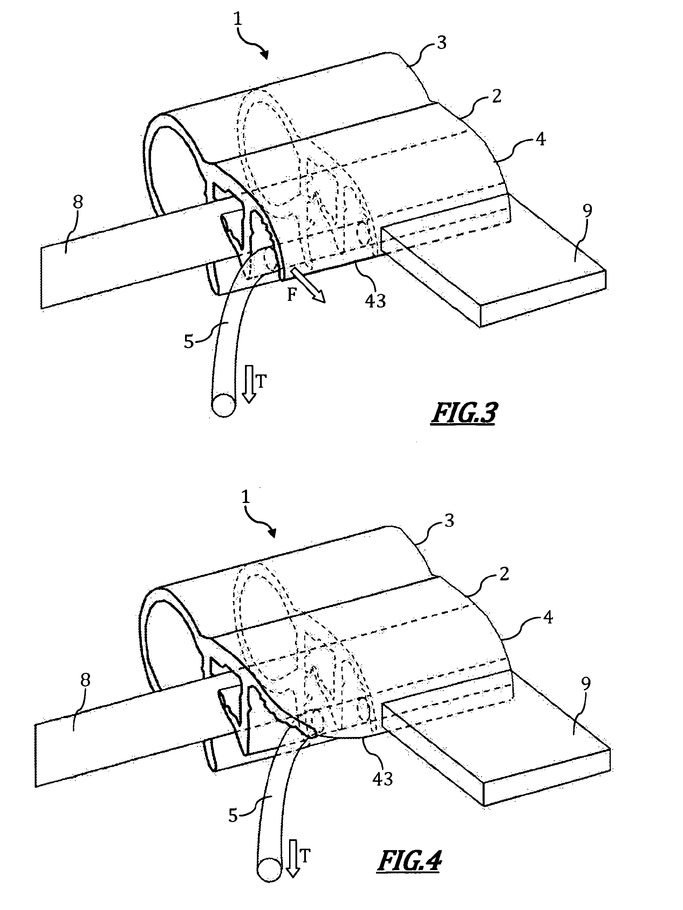

Comme illustré aux figures 1 et 3, quand le véhicule comporte des surfaces intérieures 9 à recouvrir par cette lèvre d'ébénisterie 4, ladite lèvre 4 au repos présente sa face supérieure 42, opposée à la face inférieure 41 et visible de l'extérieur, en regard des surfaces intérieures 9 correspondantes.

Pour réaliser l'opération de recouvrement, un opérateur exerce, manuellement ou à l'aide d'un outil adéquat, un effort de traction sur le cordon de pelage 5, illustré par la flèche T sur les figures 3 à 6, de sorte à soulever la lèvre d'ébénisterie 4 tout en rompant la liaison ruptible 59 et à recouvrir la surface intérieure 9. On entend ici par soulèvement le fait que le bord libre 43 de la lèvre d'ébénisterie 4 s'éloigne du support 2.

L'opérateur, en tirant sur le cordon de pelage 5, exerce ainsi un premier effort F sur le bord libre 43 de la lèvre d'ébénisterie 4, ainsi qu'illustré en figure 3, du fait de la position du cordon 5 à proximité de ce bord libre 43. Cet effort exercé sur la lèvre 4 au niveau de son bord libre 43 conduit au soulèvement dudit bord libre 43, ainsi qu'illustré en figure 4, afin qu'il chevauche au final la surface intérieure 9.

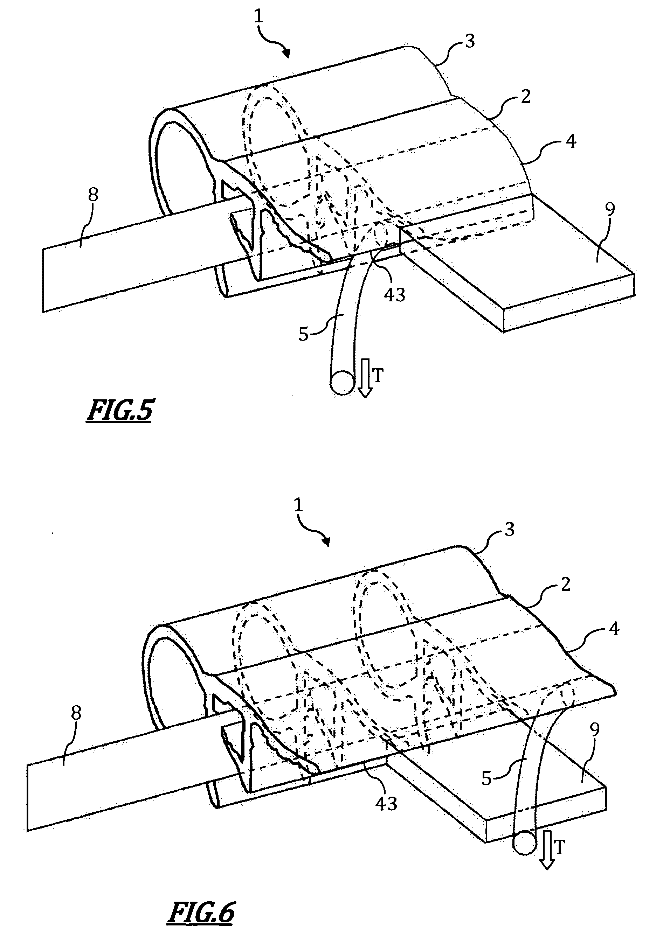

Tout en soulevant le bord libre 43 de la lèvre d'ébénisterie 4, l'opérateur tire le cordon de pelage 5 de sorte que le bord libre 43 se soulève sur toute la longueur du joint 1, en déchirant en même temps la liaison ruptible 59 le long du cordon de pelage 5, ainsi qu'illustré en figure 5 où le cordon de pelage 5 commence à se désolidariser de la lèvre d'ébénisterie 4.

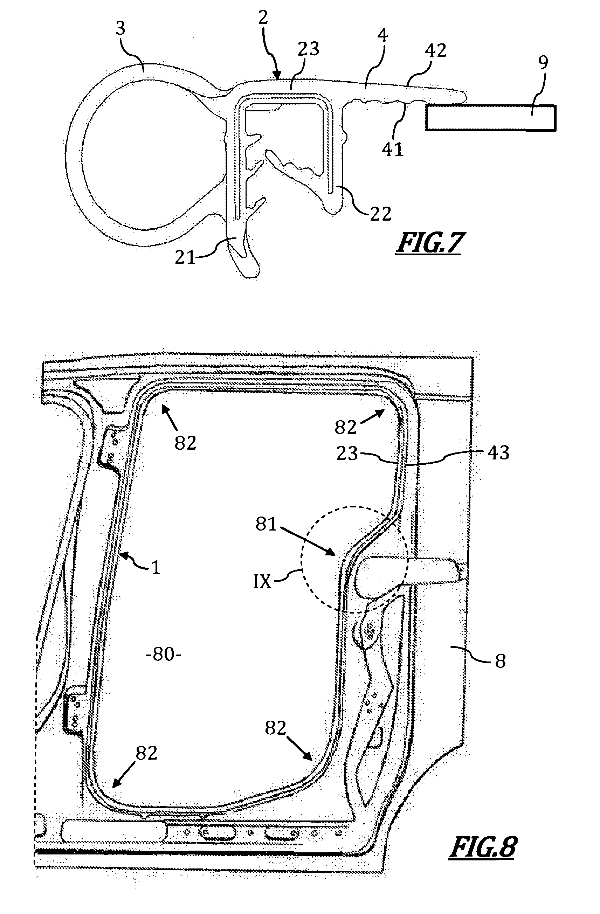

L'opérateur maintient cet effort de traction T jusqu'à recouvrir entièrement la surface intérieure 9 avec la lèvre d'ébénisterie 4 et déchirer complètement le cordon de pelage 5, ainsi qu'illustré aux figures 6 et 7. Du fait de son élasticité, la lèvre d'ébénisterie 4 se plaque avantageusement contre la surface intérieure 9 correspondante. A la fin de l'opération, l'opérateur jette le cordon de pelage 5 ainsi désolidarisé de la lèvre 4 sur toute la longueur du joint 1.

Ce type de joint présente l'inconvénient que lorsque le bord libre 43 de la lèvre d'ébénisterie 4 se situe à l'intérieur d'une courbure de l'encadrement, autrement dit lorsque la base 23 du support 2 se situe à l'extérieur d'une telle courbure, la lèvre d'ébénisterie 4 peut présenter des plissements ou bourrelets qui sont inesthétiques, et gage de mauvaise qualité perçue. Comme illustré en figure 8, de telles courbures correspondent plus particulièrement à des parties courbées 81 vers l'intérieur de l'ouverture 80 délimitée par l'encadrement d'ouvrant 8. Sur cette figure 8 qui illustre un encadrement de porte 8 vu de l'intérieur du véhicule et sur lequel est monté un joint d'étanchéité 1, le rebord d'encadrement 8 présente différentes parties courbées 82 vers l'extérieur de l'ouverture 80 aux quatre coins de cette ouverture 80, et également une partie en forme de S qui délimite une telle partie courbée 81 vers l'intérieur de l'ouverture 80. Dans cette partie courbée 81, on voit clairement que la base 23 du support 2 se situe à l'extérieur de ladite courbure 81 tandis que le bord libre 43 de la lèvre d'ébénisterie 4 se situe à l'intérieur de celle-ci, à l'inverse des autres parties courbées 82.

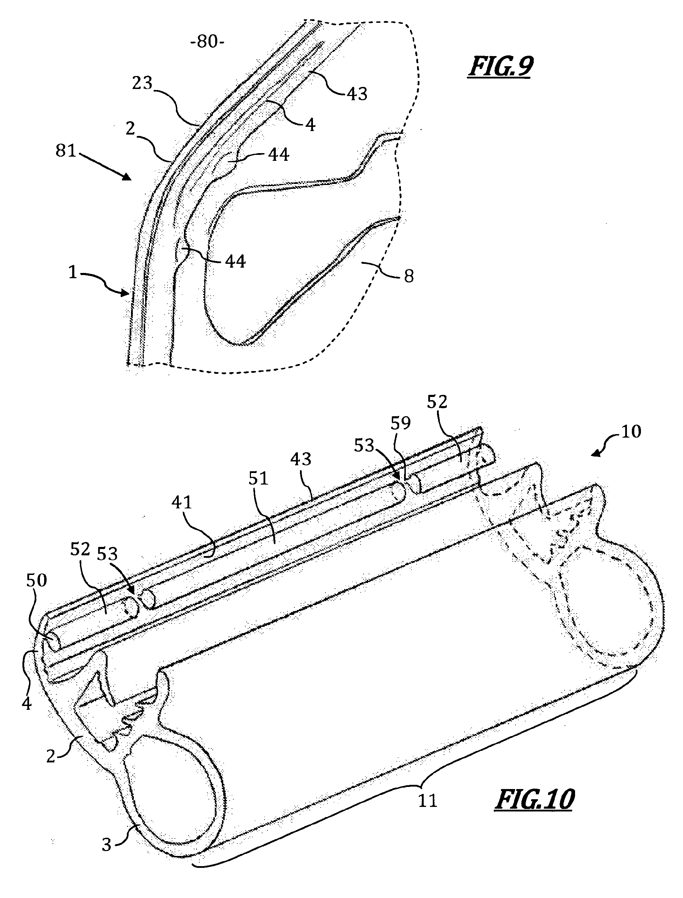

La figure 9 montre en détail le comportement de la lèvre d'ébénisterie 4 dans une telle partie courbée 81, cette dernière présente des plissements ou bourrelets 44, formant des ondulations le long de son bord libre 43, qui sont partiellement décollés par rapport à l'encadrement 8.

De telles ondulations 44 sont d'autant plus marquées que la courbure 81 est prononcée, c'est-à-dire que le rayon de courbure est diminuée,.

En outre, dans l'industrie automobile, les joints d'étanchéité sont souvent les mêmes pour différents modèles de véhicule, pour des raisons évidentes d'économie par une réduction de la diversité des pièces de véhicule. Ainsi, un joint d'étanchéité équipé d'une telle lèvre d'ébénisterie 4 peut être monté dans des véhicules ne présentant pas de garniture interne autour de la partie haute de porte, et donc pas de garniture interne au niveau de la partie courbée 81 illustrée aux figures 8 et 9 et décrite ci-dessus.

Dans ce cas, la lèvre d'ébénisterie 4 ne recouvre pas de surface intérieure au niveau de cette partie courbée 81, bien qu'elle puisse recouvrir un tapis de sol dans la partie basse de porte. Dans une telle situation, la lèvre d'ébénisterie 4 vient directement en contact contre la carrosserie, au niveau de son bord libre 43, et présente ainsi le long de cette partie courbée 81 des ondulations encore plus prononcées qui sont rédhibitoires en terme de qualité perçue.

Pour résoudre ce défaut, il est connu de rapporter le long de la partie courbée 81 de l'encadrement 8 une butée aux dimensions adéquates, du type garnissage local ou insert, qui servira localement d'appui à la lèvre d'ébénisterie 4 dans cette zone où elle aurait tendance à onduler en l'absence de garnissage.

Cet élément rapporté peut être fixé sur l'encadrement 8 avant ou après la mise en place du joint 1 sur l'encadrement de porte 8, cette mise en place du joint 1 étant pour rappel classiquement conclue par le retrait complet du cordon de pelage 5.

Cette solution n'est cependant pas satisfaisante car elle impose des étapes supplémentaires de fourniture, placement et fixation de cette butée rapportée, et également augmente le coût du véhicule du fait de cette butée supplémentaire à intégrer audit véhicule.

La présente invention vise ainsi à remédier à tout ou partie de ces inconvénients, et consiste pour cela en un joint d'étanchéité pour un encadrement d'ouvrant, notamment de type porte ou fenêtre, comprenant une partie formant support destinée à être montée sur ledit encadrement et une lèvre d'ébénisterie attenante à ladite partie formant support, le joint comprenant au moins un premier élément faisant saillie hors de ladite lèvre d'ébénisterie et conçu de manière à soutenir ladite lèvre d'ébénisterie sur ledit encadrement, ledit premier élément faisant saillie hors de la lèvre d'ébénisterie s'étendant le long d'au moins une portion dudit joint d'étanchéité qui est liée à une zone prédéterminée de l'encadrement, **caractérisé en ce qu**'il comprend au moins un deuxième élément faisant saillie de ladite lèvre d'ébénisterie et adjacent audit premier élément, ledit deuxième élément étant distinct dudit premier élément de sorte que les premier et deuxième éléments constituent des tronçons distincts d'un même cordon faisant saillie de la lèvre d'ébénisterie.

Ainsi, le joint comprend déjà un élément de soutien de la lèvre d'ébénisterie avant qu'il ne soit posé sur l'encadrement, de sorte qu'il suffit de poser le joint sur l'encadrement en positionnant ce premier élément de soutien au niveau de la zone d'encadrement concernée (par exemple la partie courbée susmentionnée), sans avoir ni à rapporter localement, avant ou après, un insert ou un garnissage local, ni à modifier l'encadrement de porte.

Ce premier élément de soutien permet ainsi à la lèvre d'ébénisterie de prendre la courbure en présentant peu ou pas d'ondulations locales trop prononcées, surtout en l'absence de surface intérieure d'appui du type garnissage au niveau de zones d'encadrement concernées.

Avantageusement, ledit ou au moins l'un des deuxièmes éléments est rattaché à la lèvre d'ébénisterie au moyen d'une liaison ruptible.

Une telle deuxième partie peut ainsi réaliser la fonction d'un cordon de pelage telle que décrite ci-dessus, à savoir permettre d'exercer un effort sur la lèvre d'ébénisterie pour l'amener à recouvrir une ou plusieurs surfaces intérieures d'un véhicule quand celle-ci est désolidarisée de la lèvre d'ébénisterie.

Les premier et deuxième éléments sont distincts l'un de l'autre en étant par exemple disposés côte à côte, parallèlement ou non, ou dans le prolongement l'un de l'autre sur une ou plusieurs portions de longueur du joint.

Ainsi, ces deux éléments distincts sont réalisés à partir d'un seul et même cordon, facilitant notamment la fabrication du joint.

Avantageusement, le ou chaque deuxième élément constitue un tronçon du cordon destiné à être désolidarisé de la lèvre d'ébénisterie, notamment par rupture de la liaison ruptible, en transmettant un effort sur ladite lèvre d'ébénisterie de sorte à former un tronçon de pelage de ladite lèvre d'ébénisterie.

Le ou chaque premier élément constitue de préférence un tronçon du cordon destiné à rester solidaire de la lèvre d'ébénisterie de sorte à soutenir ladite lèvre d'ébénisterie sur l'encadrement le long d'au moins une zone prédéterminée.

Un tel mode de réalisation est particulièrement avantageux car il permet d'utiliser comme élément de soutien de la lèvre d'ébénisterie un tronçon d'un cordon qui est habituellement utilisé uniquement comme cordon de pelage et donc complètement retiré de la lèvre pour ensuite être jeté.

Cette solution est à la fois économique et très pratique car elle utilise un élément déjà solidaire de la lèvre d'ébénisterie, à savoir un cordon existant auquel l'invention attribue une nouvelle fonction : soutenir la lèvre d'ébénisterie dans les parties d'encadrement où la lèvre d'ébénisterie aurait tendance à onduler sans élément de soutien.

En sectionnant ou découpant le cordon, l'invention vise à distinguer et séparer différents tronçons auxquels on attribue des fonctions distinctes. De la sorte, lorsqu'un opérateur tire sur le cordon et ainsi le désolidarise de la lèvre d'ébénisterie, comme déjà décrit ci-dessus, il entraîne uniquement le ou les deuxièmes éléments dits de pelage, et il ne risque pas de déchirer et d'emmener le ou les premiers éléments destinés à rester solidaire de la lèvre d'ébénisterie pour servir de soutien local à cette dernière.

Selon une caractéristique, le ou chaque premier élément présente des dimensions prédéterminées pour que, en utilisation du joint sur l'encadrement, ledit premier élément assure un soutien adapté à la géométrie de la zone correspondante de l'encadrement, les dimensions du ou de chaque premier élément étant différentes entre elles.

Avantageusement, le cordon est constitué d'un profilé de section continue dont les dimensions résultent non plus du seul fait que ledit cordon doit pouvoir être attrapé par un opérateur, manuellement ou à l'aide d'un outil, mais également du fait que un ou plusieurs tronçons du cordon présente une fonction de support de la lèvre d'ébénisterie. Ainsi, les dimensions du cordon peuvent également être dictées par la géométrie des zones prédéterminées (telles que la ou les parties courbées susmentionnées), comme leurs rayons de courbure. Ainsi, tout en restant attrapable, la section du cordon selon l'invention peut avoir des dimensions supérieures aux dimensions des cordons de pelage classiques, l'essentiel étant qu'il évite les ondulations susmentionnées.

Avantageusement, le cordon est tout le long solidaire de la lèvre d'ébénisterie au moyen d'une liaison ruptible formée notamment d'une réduction de matière entre ladite lèvre d'ébénisterie et le cordon, afin de faciliter la désolidarisation des tronçons concernés.

Selon une autre caractéristique avantageuse de l'invention, le ou au moins l'un des premiers éléments, et éventuellement le ou au moins l'un des deuxièmes éléments, vient de matière avec la lèvre d'ébénisterie. Cette caractéristique s'appliquant de facto à un cordon selon l'invention quand ces éléments distincts forment des tronçons d'un cordon.

L'invention porte également sur un véhicule, notamment du type automobile, comprenant au moins un ouvrant, notamment de type porte ou fenêtre, comprenant un encadrement sur lequel est monté un joint d'étanchéité tel que décrit ci-dessus.

Comme indiqué ci-dessus, l'encadrement comporte par exemple au moins une partie courbée vers l'intérieur de l'ouverture délimitée par ledit encadrement, et le ou les premiers éléments de soutien dudit joint assurent le soutien de la lèvre d'ébénisterie le long de cette ou ces parties d'encadrement courbées.

Avantageusement, l'encadrement d'ouvrant comporte un marquage destiné à permettre le positionnement dudit joint sur ledit encadrement de sorte que l'élément de soutien soit positionné le long de la partie correspondante d'encadrement courbée vers l'intérieur.

L'invention concerne également un procédé de fabrication d'un joint d'étanchéité pour l'encadrement d'un ouvrant, comprenant une étape de fourniture d'un joint d'étanchéité comportant une partie formant support, une lèvre d'ébénisterie attenante à ladite partie formant support, et un cordon faisant saillie de ladite lèvre d'ébénisterie, **caractérisé en ce qu**'il comprend en outre une étape consistant à ménager au moins un évidement de matière dans ledit cordon, notamment par un cisaillement dudit cordon dans sa section transversale, de sorte à distinguer au moins un premier tronçon de au moins un deuxième tronçon, ledit ou chaque premier tronçon formant un premier élément conçu de manière à soutenir ladite lèvre d'ébénisterie sur ledit encadrement le long d'au moins une zone prédéterminée dudit encadrement, et ledit ou chaque deuxième tronçon formant un deuxième élément destiné à être désolidarisé de la lèvre d'ébénisterie en transmettant un effort sur ladite lèvre d'ébénisterie de sorte à former un tronçon de pelage de ladite lèvre d'ébénisterie.

D'autres caractéristiques et avantages de la présente invention apparaîtront à la lecture de la description détaillée ci-après, d'un exemple de mise en oeuvre non limitatif, faite en référence aux figures annexées dans lesquelles :
- la figure 1, déjà décrite, est une vue en coupe transversale d'un joint classique pouvant servir de base à un joint conforme à l'invention ;
- les figures 2 à 6, déjà décrites, sont des vues en perspectives du joint de la figure 1 illustrant les différentes étapes de recouvrement d'une surface intérieure par la lèvre d'ébénisterie de ce joint ;
- la figure 7, déjà décrite, est une vue identique à celle de la figure 1 où la lèvre d'ébénisterie du joint recouvre la surface intérieure associée ;
- la figure 8, déjà décrite, est une vue de face d'un encadrement d'ouvrant équipé d'un joint d'étanchéité classique ;
- la figure 9, déjà décrite, est une vue détaillée de la zone IX de la figure 8 illustrant les ondulations d'une lèvre d'ébénisterie pour un joint classique ;
- la figure 10 est une vue en perspective de dessous d'un joint conforme à l'invention ;
- la figure 11 est une vue identique à celle de la figure 9 illustrant l'absence d'ondulations d'une lèvre d'ébénisterie pour un joint conforme à l'invention ;
- la figure 12 est une vue identique à celle de la figure 8 illustrant un encadrement de porte conforme à l'invention qui présente un marquage de positionnement d'un joint conforme à l'invention.

Les figures 1 à 9 représentent une solution connue de l'état de technique relative au contexte de l'invention. Par souci de clarté, sur les figures 10 à 12 de l'invention, les éléments communs avec la solution de l'état de la technique reprennent les mêmes repères que ceux des figures 1 à 9.

Un joint d'étanchéité 10 selon l'invention est illustré partiellement en figure 10. Ce joint d'étanchéité 10 dérive directement du joint d'étanchéité classique 1 décrit ci-dessus, de sorte que les mêmes références sont utilisées pour décrire une partie des éléments le constituant, à savoir la partie formant support 2, la partie d'étanchéité souple 3 et la lèvre d'ébénisterie 4 qui ne seront pas décrits à nouveau.

En outre, la description ne considérera qu'une seule partie courbée 81, bien que la présente invention puisse être étendue à un encadrement de porte présentant plusieurs parties courbées 81 où la lèvre d'ébénisterie 4 est susceptible de former des plissements et ondulations 44.

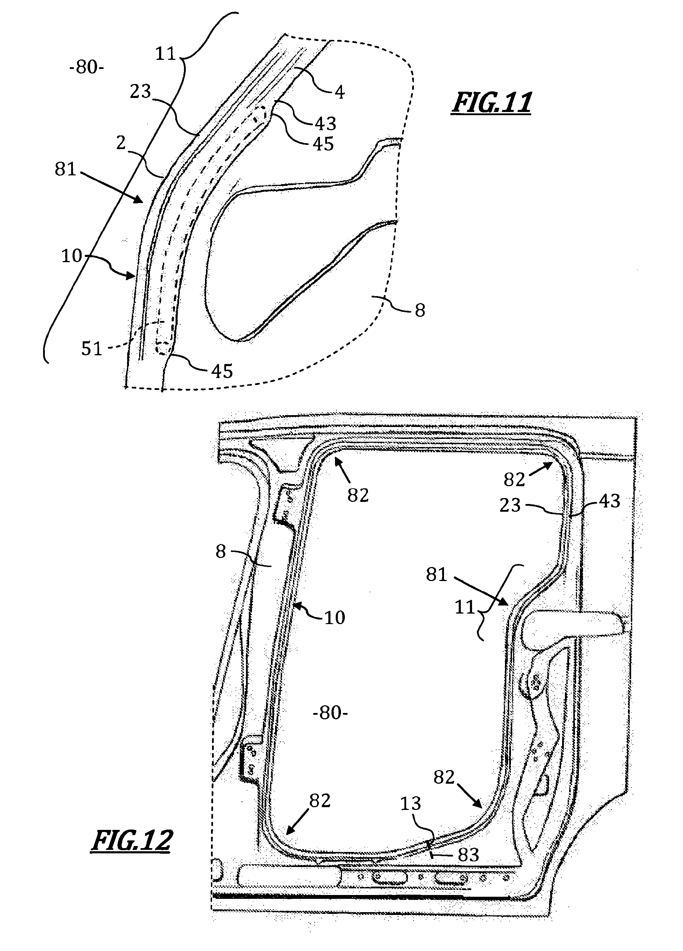

Le joint d'étanchéité 10 selon l'invention est représenté sous la forme d'un profilé rectiligne, obtenu par exemple en sortie d'une extrudeuse, uniquement sur une portion de longueur qui correspond à la portion 11 du joint 10 qui sera disposé le long de la partie courbée 81 de l'encadrement de porte 8 ; cette portion 11 du joint 10 étant également illustrée aux figures 11 et 12 lorsque le joint 10 est mis en place sur l'encadrement d'ouvrant 8 présentant la partie courbée 81 en question et décrite ci-dessus.

Ce joint 10 comprend un premier élément 51 solidaire de la face inférieure 41 de la lèvre d'ébénisterie 4 sur au moins la portion 11 de longueur dudit joint 10, de sorte à former un soutien pour la lèvre d'ébénisterie 4 sur cette partie courbée 81 de l'encadrement 8 et donc à limiter voire éviter les ondulations ou plissements susmentionnés. Ce premier élément 51 fait saillie de la face inférieure 41 de la lèvre d'ébénisterie 4 et il présente une forme allongée, de section circulaire, s'étendant selon la direction longitudinale du joint 10.

Le joint 10 comprend également des deuxièmes éléments 52 également solidaires de la face inférieure 41 de la lèvre d'ébénisterie 4 et disposés de part et d'autre du premier élément 51. Ces deuxièmes éléments 52 font également saillie de la face inférieure 41 de la lèvre d'ébénisterie 4 et présentent une forme allongée, de section circulaire, s'étendant selon la direction longitudinale du joint 10. Les premier 51 et deuxièmes 52 éléments présentent la même section et sont alignés longitudinalement.

Les deuxièmes éléments 52 sont distincts du premier élément 51 en étant dans le prolongement de celui-ci. En particulier, les deuxièmes éléments 52 sont séparés du premier élément 51 par des espacements 53 ménagés entre les extrémités en vis-à-vis des éléments 51, 52 successifs. Les deuxièmes éléments 52 ont pour fonction de permettre le recouvrement d'une surface intérieure du véhicule, telle qu'une garniture interne ou un tapis de sol, par la lèvre d'ébénisterie 4 de la même manière qu'un cordon de pelage 5 classique déjà décrit ci-dessus. Ces deuxièmes éléments 52 sont ainsi rattachés à la lèvre d'ébénisterie 4 par une liaison ruptible 59, formée ici d'une réduction de matière entre chaque deuxième élément 52 et la lèvre d'ébénisterie 4, à proximité du bord libre 43 de la lèvre 4.

Dans un mode de réalisation particulier, ces éléments 51, 52 dérivent directement du cordon de pelage 5 classique décrit ci-dessus et, de façon plus générale, constituent chacun un tronçon d'un cordon 50 en saillie de la face inférieure 41 de la lèvre d'ébénisterie 4.

Ainsi qu'illustré en figure 10, le premier élément 51 est formé d'un premier tronçon 51 du cordon 50 qui est désolidarisé du reste 52 du cordon 50 au moyen de deux sectionnements 53 ménagés dans ledit cordon 50 à chacune des extrémités dudit premier tronçon 51. Ces sectionnements 53 forment ainsi les espacements susmentionnés, et sont obtenus notamment par un cisaillement ou une découpe du cordon 50 dans sa section transversale. Sur la figure 10, les sectionnements 53 ont été volontairement exagérés pour bien illustrer l'isolement du premier tronçon de cordon 51 du reste 52 du cordon 50. Les deuxièmes éléments 52 constituent le reste du cordon 50, c'est-à-dire les autres tronçons du cordon 50 disposés de part et d'autre du premier tronçon 51.

Avant utilisation du joint 10 sur l'encadrement d'ouvrant 8, les deux sectionnements 53 du cordon 5 permettent de désolidariser le premier tronçon de cordon 51 des deux tronçons 52 adjacents, dits tronçons de pelage du fait de leur fonction susmentionnée. Ces deux tronçons de pelage 52 présentent chacun une première extrémité en regard de l'extrémité opposée du premier tronçon 51 duquel il est espacé par le sectionnement 53 correspondant. Ces deux tronçons de pelage 52 présentent chacun une deuxième extrémité destinée à être reliée l'une à l'autre lorsque le joint 10 est mis en place sur l'encadrement 8 et connecté à ses deux extrémités libre, de sorte à fermer l'anneau d'étanchéité autour de l'ouverture 80.

Le joint 10 est généralement produit sous la forme d'un profilé linéaire, puis découpé à la longueur adéquate pour entourer complètement l'ouverture 80 associée de l'encadrement 8, puis posé sur l'encadrement 8 de sorte à pouvoir joindre ses deux extrémités 13 qui seront ensuite soudées, par exemple par un procédé de surmoulage bord à bord.

Les sectionnements 53 sont avantageusement réalisés après la découpe du joint 10, au moyen par exemple d'un outil de découpe en reprise, et avant l'étape de soudage des extrémités 13 dudit joint 10.

Dans ce mode de réalisation, le premier tronçon 51 (ou premier élément) est également rattaché à la lèvre d'ébénisterie 4 par une liaison ruptible 59. Néanmoins, les sectionnements 53 délimitant ce premier tronçon 51 font que lorsqu'un opérateur déchire les tronçons de pelage 52, notamment pour permettre le ou les recouvrements susmentionnés, son action de déchirement s'arrête au niveau de ces sectionnements 53 et ainsi il n'entraîne pas le premier tronçon 51 avec les tronçons de pelage 52. De la sorte, l'opérateur ne déchire pas le premier tronçon 51, de sorte que ce dernier reste solidaire de la lèvre d'ébénisterie 4 et peut réaliser sa fonction de soutien de la lèvre d'ébénisterie 4 sur l'encadrement 8.

Ainsi qu'illustré en figure 11, le premier tronçon 51, représenté en traits pointillés, qui est resté solidaire du joint 10 forme un soutien pour la lèvre d'ébénisterie 4, et évite que celle-ci ne forme des plis ou des ondulations le long de la partie courbée 81. Aux extrémités du premier tronçon 51 correspondent des marches 45 du bord libre 43 de la lèvre d'ébénisterie 4 qui sont esthétiquement plus acceptables et qui nuisent beaucoup moins à l'étanchéité que les ondulations non contrôlées 44.

Les dimensions (ou diamètre) de la section continue du cordon 50, correspondant aux dimensions de la section du premier élément ou tronçon 51, sont prédéterminées pour que ledit premier tronçon 51 ne génère pas de marches 45 trop prononcées, et avantageusement le diamètre maximale du cordon 50 sera de l'ordre d'une dizaine de millimètres.

Selon une variante, le cordon 50 ne comporte qu'un seul premier tronçon 51 et un seul deuxième tronçon 52, de sorte que la soudure du joint 10 prévue pour fermer l'anneau autour de l'ouverture 80 se fera au niveau de l'une des extrémités du premier tronçon 51.

Le montage du joint 10 sur l'encadrement 8 est décrit ci-dessous en référence aux figures 11 et 12.

Dans une première étape, l'opérateur positionne le joint 10 sur l'encadrement 8, en engageant le support 2 autour du rebord de l'ouverture 80, de sorte que le premier tronçon 51 soit positionné correctement le long de la partie courbée 81. Pour permettre un bon centrage du joint 10, les extrémités soudées 13 du joint 10, visibles de l'opérateur, peuvent servir de centrage vis-à-vis d'un marquage 83 ménagé sur l'encadrement 8.

Dans une deuxième étape, l'opérateur passe un outil adapté pour assurer le maintien du support 2 sur l'encadrement 8, par exemple du type outil de roll-forming comprenant des galets espacés l'un de l'autre de sorte que ces galets exerce une pression sur les deux branches 21, 22 du support 2 pour refermer le support 2 afin qu'il ne puisse se déchausser de l'encadrement.

Dans une troisième étape, l'opérateur retire le ou les tronçons de pelage 52 en partant d'un sectionnement 53 jusqu'à un autre sectionnement 53, de sorte à désolidariser ces tronçons 52 de la lèvre d'ébénisterie 4, et ensuite à les évacuer dans les déchets.

Bien entendu l'exemple de mise en oeuvre évoqué ci-dessus ne présente aucun caractère limitatif et d'autres détails et améliorations peuvent être apportés au joint selon l'invention, sans pour autant sortir du cadre de l'invention où d'autres formes de premier élément de soutien peuvent être réalisées.

## Revendications

1. Joint (10) d'étanchéité pour un encadrement (8) d'ouvrant, notamment de type porte ou fenêtre, comprenant une partie formant support (2) destinée à être montée sur ledit encadrement (8) et une lèvre d'ébénisterie (4) attenante à ladite partie formant support (2), le joint (10) comprenant au moins un premier élément (51) faisant saillie hors de ladite lèvre d'ébénisterie (4) et conçu de manière à soutenir ladite lèvre d'ébénisterie (4) sur ledit encadrement (8), ledit premier élément (51) faisant saillie hors de la lèvre d'ébénisterie (4) s'étendant le long d'au moins une portion (11) dudit joint (10) qui est liée à une zone prédéterminée (81) de l'encadrement (8), **caractérisé en ce qu'**il comprend au moins un deuxième élément (52) faisant saillie de ladite lèvre d'ébénisterie (4) et adjacent audit premier élément (51), ledit deuxième élément (52) étant distinct dudit premier élément (51) de sorte que les premier (51) et deuxième (52) éléments constituent des tronçons distincts d'un même cordon (50) faisant saillie de la lèvre d'ébénisterie (4).

2. Joint (10) selon la revendication 1, **caractérisé en ce que** ledit ou au moins l'un des deuxièmes éléments (52) est rattaché à la lèvre d'ébénisterie (4) au moyen d'une liaison ruptible (59).

3. Joint (10) selon la revendication 2, **caractérisé en ce que** le ou chaque deuxième élément (52) constitue un tronçon du cordon (50) destiné à être désolidarisé de la lèvre d'ébénisterie (4), notamment par rupture de la liaison ruptible (59), en transmettant un effort sur ladite lèvre d'ébénisterie (4) de sorte à former un tronçon de pelage de ladite lèvre d'ébénisterie (4).

4. Joint (10) selon la revendication 3, **caractérisé en ce que** le ou chaque premier élément (51) constitue un tronçon du cordon (50) destiné à rester solidaire de la lèvre d'ébénisterie (4) de sorte à soutenir ladite lèvre d'ébénisterie (4) sur l'encadrement (8) le long d'au moins une zone prédéterminée (81).

5. Joint (10) selon l'une quelconque des revendications précédentes, **caractérisé en ce que** le ou chaque premier élément (51) présente des dimensions prédéterminées pour que, en utilisation du joint (10) sur l'encadrement (8), ledit premier élément (51) assure un soutien adapté à la géométrie de la zone (81) correspondante de l'encadrement (8), les dimensions du ou de chaque premier élément (51) étant différentes entre elles.

6. Joint (10) selon la revendication 1, **caractérisé en ce que** le ou au moins l'un des premiers éléments (51), et éventuellement le ou au moins l'un des deuxièmes éléments (52), vient de matière avec la lèvre d'ébénisterie (4).

7. Véhicule, notamment du type automobile, comprenant au moins un ouvrant, notamment de type porte ou fenêtre, comprenant un encadrement (8) sur lequel est monté un joint d'étanchéité (10) conforme à l'une quelconque des revendications précédentes.

8. Procédé de fabrication d'un joint d'étanchéité (10) pour l'encadrement (8) d'un ouvrant, comprenant une étape de fourniture d'un joint d'étanchéité comportant une partie formant support (2), une lèvre d'ébénisterie (4) attenante à ladite partie formant support (2), et un cordon (50) faisant saillie hors de ladite lèvre d'ébénisterie (4), **caractérisé en ce qu'**il comprend en outre une étape consistant à ménager au moins un évidement de matière dans ledit cordon (50), notamment par un cisaillement dudit cordon (50) dans sa section transversale, de sorte à distinguer au moins un premier tronçon (51) de au moins un deuxième tronçon (52), ledit ou chaque premier tronçon (51) formant un premier élément conçu de manière à soutenir ladite lèvre d'ébénisterie (4) sur ledit encadrement (8) le long d'au moins une zone prédéterminée (81) dudit encadrement (8), et ledit ou chaque deuxième tronçon (52) formant un deuxième élément destiné à être désolidarisé de la lèvre d'ébénisterie (4) en transmettant un effort sur ladite lèvre d'ébénisterie (4) de sorte à former un tronçon de pelage de ladite lèvre d'ébénisterie (4).

## Claims

1. A gasket (10) for a frame (8) of an openable part, in particular of the door or window type, comprising a part forming a support (2) intended to be mounted on the said frame (8) and a lip (4) of the type used in cabinetmaking, (hereinafter cabinet lip (4)), adjoining the said part forming support (2), the gasket (10) comprising at least a first element (51) projecting outside the said cabinet lip (4) and designed so as to support the said cabinet lip (4) on the said frame (8), the said first element (51) projecting outside the cabinet lip (4), extending along at least a portion (11) of the said gasket (10) which is linked to a predetermined zone (81) of the frame (8), **characterized in that** it comprises at least a second element (51) projecting from the said cabinet lip (4) and adjacent to the said first element (51), the said second element (51) being distinct from the said first element (51) so that the first (51) and second (52) elements constitute distinct sections of the same cord (50) projecting from the cabinet lip (4).

2. The gasket (10) according to Claim 1, **characterized in that** the said or at least one of the second elements (52) is fastened to the cabinet lip (4) by means of a breakable connection (59).

3. The gasket (10) according to Claim 2, **characterized in that** the or each second element (52) constitutes a section of the cord (50) intended to be freed from the cabinet lip (4), in particular by breaking the breakable connection (59), transmitting a stress on the said cabinet lip (4) so as to form a peeling section of the said cabinet lip (4).

4. The gasket (10) according to Claim 3, **characterized in that** the or each first element (51) constitutes a section of the cord (50) intended to remain integral with the cabinet lip (4) so as to support the said cabinet lip (4) on the frame (8) along at least one predetermined zone (81).

5. The gasket (10) according to any one of the preceding claims, **characterized in that** the or each first element (51) has predetermined dimensions so that, using the gasket (10) on the frame (8), the said first element (51) ensures a support suited to the geometry of the corresponding zone (81) of the frame (8), the dimensions of the or each first element (51) being different from each other.

6. The gasket (10) according to Claim 1, **characterized in that** the or at least one of the first elements (51), and possibly the or at least one of the second elements (52), forms a single piece with the cabinet lip (4).

7. A vehicle, in particular of the automobile type, comprising at least one openable part, in particular of the door or window type, comprising a frame (8) on which a gasket (10) is mounted in accordance with any one of the preceding claims.

8. A method for the manufacture of a gasket (10) for the frame (8) of an openable part, comprising a supply stage of a gasket comprising a part forming a support (2), a cabinet lip (4) adjoining the said part forming a support (2), and a cord (50) projecting outside the said cabinet lip (4), **characterized in that** it further comprises a stage consisting in arranging at least one recess of material in the said cord (50), in particular by a shearing of the said cord (50) in its transverse section, so as to distinguish at least one first section (51) from at least one second section (52), the said or each first section (51) forming a first element designed so as to support the said cabinet lip (4) on the said frame (8) along at least one predetermined zone (81) of the said frame (8), and the said or each second section (52) forming a second element intended to be freed from the cabinet lip (4), transmitting a stress on the said cabinet lip (4) so as to form a peeling section of the said cabinet lip (4) .

## Patentansprüche

1. Dichtung (10) für einen Rahmen (8) eines Öffnungsverschlusses, insbesondere des Typs Tür oder Fenster, einen Teil aufweisend, der einen Träger (2) bildet, der dazu bestimmt ist, auf dem Rahmen (8) montiert zu werden, und eine Strukturlippe (4) die an den den Träger (2) bildenden Teil angrenzt, wobei die Dichtung (10) mindestens ein erstes Element (51) aufweist, das aus der Strukturlippe (4) vorsteht und konzipiert ist, um die Strukturlippe (4) auf dem Rahmen (8) zu tragen, wobei sich das erste Element (51), das aus der Strukturlippe (4) vorsteht, entlang mindestens eines Abschnitts (11) der Dichtung (10) erstreckt, der mit einer vorbestimmten Zone (81) des Rahmens (8) verbunden ist, **dadurch gekennzeichnet, dass** sie mindestens ein zweites Element (52) aufweist, das aus der Strukturlippe (4) vorsteht und neben dem ersten Element (51) liegt, wobei das zweite Element (52) von dem ersten Element (51) derart getrennt ist, dass das erste (51) und das zweite (52) Element getrennte Abschnitte eines gleichen Bands (50), das aus der Strukturlippe (4) vorsteht, bilden.

2. Dichtung (10) nach Anspruch 1, **dadurch gekennzeichnet, dass** das oder mindestens eines der zweiten Elemente (52) an der Strukturlippe (4) mittels einer brechbaren Verbindung (59) angeschlossen ist.

3. Dichtung (10) nach Anspruch 2, **dadurch gekennzeichnet, dass** das oder jedes zweite Element (52) einen Abschnitt des Bands (50) bildet, der dazu bestimmt ist, von der Strukturlippe (4) getrennt zu werden, insbesondere durch das Brechen der brechbaren Verbindung (59), indem eine Kraft auf die Strukturlippe (4) derart übertragen wird, dass ein Abziehabschnitt der Strukturlippe (4) gebildet wird.

4. Dichtung (10) nach Anspruch 3, **dadurch gekennzeichnet, dass** das oder jedes erste Element (51) einen Abschnitt des Bands (50) bildet, der dazu bestimmt ist, fest mit der Strukturlippe (4) derart verbunden zu bleiben, dass die Strukturlippe (4) auf dem Rahmen (8) entlang mindestens einer vorbestimmten Zone (81) getragen wird.

5. Dichtung (10) nach einem der vorhergehenden Ansprüche, **dadurch gekennzeichnet, dass** das oder jedes erste Element (51) vorbestimmte Maße aufweist, damit beim Gebrauch der Dichtung (10) auf dem Rahmen (8) das erste Element (51) ein geeignetes Tragen für die Geometrie der entsprechenden Zone (81) des Rahmens (8) sicherstellt, wobei die Maße des oder jedes ersten Elements (51) untereinander unterschiedlich sind.

6. Dichtung (10) nach Anspruch 1, **dadurch gekennzeichnet, dass** das oder mindestens eines der ersten Elemente (51) und eventuell das oder mindestens eines der zweiten Elemente (52) aus einem Stück mit der Strukturlippe (4) gebildet ist.

7. Fahrzeug, insbesondere Kraftfahrzeug, das mindestens einen Öffnungsverschluss aufweist, insbesondere des Typs Tür oder Fenster, der einen Rahmen (8) aufweist, auf den eine Dichtung (10) nach einem der vorhergehenden Ansprüche montiert ist.

8. Verfahren zum Herstellen einer Dichtung (10) für den Rahmen (8) eines Öffnungsverschlusses, das einen Schritt des Lieferns einer Dichtung aufweist, die einen Teil aufweist, der einen Träger (2) bildet, eine Strukturlippe (4), die an den den Träger (2) bildenden Teil angrenzt, und ein Band (50), das aus der Strukturlippe (4) vorsteht, **dadurch gekennzeichnet, dass** es ferner einen Schritt aufweist, der darin besteht, mindestens eine Aussparung von Material in dem Band (50) einzurichten, insbesondere durch ein Scheren des Bands (50) in seinem Querschnitt, so dass mindestens ein erster Abschnitt (51) von mindestens einem zweiten Abschnitt (52) unterschieden wird, wobei der oder jeder erste Abschnitt (51) ein erstes Element bildet, das derart konzipiert ist, dass die Strukturlippe (4) auf dem Rahmen (8) entlang mindestens einer vorbestimmten Zone (81) des Rahmens (8) getragen wird, und wobei der oder jeder zweite Abschnitt (52) ein zweites Element bildet, das dazu bestimmt ist, von der Strukturlippe (4) getrennt zu werden, indem eine Kraft auf die Strukturlippe (4) derart übertragen wird, dass ein Abziehabschnitt der Strukturlippe (4) gebildet wird.
